# EUROPÄISCHE PATENTSCHRIFT

(11) **EP 0 458 069 B1**
(45) Veröffentlichungstag und Bekanntmachung des Hinweises auf die Patenterteilung: **26.01.1994**
(21) Anmeldenummer: 91106390.7
(22) Anmeldetag: 20.04.1991
(51) Int. Cl.: F16B 7/04

(54) **Querverbindung von Profilstäben**
Cross linkage for profile bars
Liaison transversale pour des barres profilées

(30) Priorität: 21.05.1990 DE 4016320
(43) Veröffentlichungstag der Anmeldung: 27.11.1991
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE); Luxem, Siegfried, 42699 Solingen (DE); Schuster, Harald, Dipl.-Ing., 42659 Solingen (DE)
(74) Vertreter: Eichler, Peter, Dipl.-Ing.

(56) Entgegenhaltungen:
- EP-A- 0 233 525
- EP-A- 0 343 942
- DE-A- 3 438 773

## Beschreibung

Die Erfindung bezieht sich auf eine Querverbindung von zwei rechtwinklig aufeinander stehenden, mit hinterschnittenen Längsnuten versehenen Profilstäben, mit einer an ihrem einen Ende einen Kopf aufweisenden Verbindungsschraube, die parallel zur Symmetrieachse eines längs verlaufenden Profilstabes in einer hinterschnittenen Längsnut desselben angeordnet ist, mit ihrem anderen Ende in eine in einer hinterschnittenen Längsnut des quer verlaufenden Profilstabs angeordnete Schraubenmutter eingreift, und mit ihrem Kopf ein zylindrisches Widerlagerstück hintergreift, das in die hinterschnittene Längsnut des Profilstabs axial unverschieblich eingebaut ist und das eine Durchtrittsbohrung für die Verbindungsschraube hat.

Aus der DE 34 38 773 A1 ist eine Querverbindung von Profilstäben mit den vorstehend genannten Merkmalen bekannt. Das Widerlagerstück ist flach ausgebildet, so daß sein Durchmesser größer als seine Länge ist. Die bekannte Querverbindung genügt den Stabilitätsanforderungen vollständig. Es ist jedoch erforderlich, in dem anzuschließenden Profilstab zylindrische Ausnehmungen quer zu seiner Längserstreckung herzustellen, um das zylindrische Widerlagerstück unterbringen zu können. Darüber hinaus ist durch das erkennbare zylindrische Widerlagerstück stets eine Befestigungsstelle markiert. Letztlich kann ein einmal mit zylindrischen Querbohrungen versehener Profilstab nicht universell wiederverwendet werden, weil die Querbohrungen stets erkennbar bleiben.

Aus der EP 0 233 525 B1 ist bereits eine Querverbindung bekannt, dessen anzuschließender Profilstab nach einem Lösen der Querverbindung uneingeschränkt wiederverwendbar ist. Die bekannte Verbindungseinrichtung besteht im wesentlichen aus drei Teilen, nämlich einem in die hinterschnittene Längsnut des querverlaufenden Profilstabs einsetzbaren, Anschlußgewinde aufweisenden Nutenstein, an dem ein Zwischenkupplungsstück lösbar zu befestigen ist, das seinerseits mit einer selbstschneidenden Mutter lösbar verbunden werden kann, die von der Stirnseite des anzuschließenden Profilstabs in dessen zentrale Innenkammer eingeschraubt werden kann. Bei dieser bekannten Querverbindung wird zwar vermieden, Querbohrungen oder sonstwie gestaltete Ausnehmungen zur Aufnahme eines Widerlagerstücks herstellen zu müssen. Die mit einem Schneidgewinde versehene Mutter greift jedoch zentral an dem anzuschließenden Profilstab an. Das Zwischenkupplungsstück benötigt daher ein unverdrehbar befestigtes Zentrierstück, welches ebenfalls in die zentrale Kammer des anzuschließenden Profilstabs eingreifen muß. Die bekannte selbstschneidende Mutter und das bekannte Zwischenkupplungsstück müssen infolgedessen speziell auf die Bemessung der zentralen Kammer des anzuschließenden Profilstabs abgestimmt sein. Außerdem werden die Längsnuten bei der Befestigung des Zwischenkupplungsstücks zum Einbringen von Verbindungsschrauben dieses Zwischenkupplungsstücks mit dem Nutenstein des querverlaufenden Profilstabs benötigt. Die bekannte Querverbindung ist daher baulich aufwendig und in ihrer Anwendung auf einen einzigen Querschnitt des anzuschließenden Profilstabs abgestimmt.

Aus der EP-0 343 942 A2 ist eine Querverbindung von zwei mit Längsnuten versehenen Profilstäben bekannt, bei der in die Zentralkammer eines Profilstabs bzw. in dessen koaxiales vorgefertigtes Gewinde ein Widerlagerstück eingeschraubt wird. Dieses Verbindungsstück ist hohl, so daß eine Verbindungsschraube mit einem Schraubenschaft hindurchgesteckt werden kann, wobei sich der Schraubenkopf am Widerlagerstück abstützt, wenn die Verbindungsschraube in eine Schraubenmutter hineingedreht wird, die sich in einer hinterschnittenen Längsnut des querverlaufenden Profilstabs befindet, so daß dieser dem Anzugsmoment entsprechend gegen den anderen Profilstab gepreßt wird. Zur Betätigung der Verbindungsschraube ist die Wand der Zentralkammer mit einer Durchgriffsöffnung für einen Betätigungsschlüssel zu versehen. Bei dieser Querverbindung muß nicht nur das Gewinde des Profilstabs zum Eindrehen des Widerlagerstücks vorgefertigt werden, sondern auch die Eingriffsbohrung für einen Schlüssel der Verbindungsschraube. Alle Verbindungsteile müssen speziell auf die Bemessung der zentralen Kammer des anzuschließenden Profilstabs abgestimmt sein.

Demgegenüber liegt der Erfindung die Aufgabe zugrunde, eine Querverbindung mit den eingangs genannten Merkmalen so zu verbessern, daß sie weitgehend unabhängig von dem Querschnitt des anzuschließenden Profilstabs eingesetzt werden kann, wobei der bauliche Aufwand klein sein soll, ohne die Verbindungssicherheit herabzusetzen.

Diese Aufgabe wird dadurch gelöst, daß die Symmetrieachse des zylindrischen Widerlagerstücks koaxial zur Symmetrieachse der Durchtrittsbohrung für die Verbindungsschraube angeordnet ist und der Außendurchmesser des Widerlagerstücks dem Querschnitt der hinterschnittenen Längsnut des Profilstabs so angepaßt ist, daß das auf dem Außenumfang des zylindrischen Widerlagerstücks angebrachte Gewinde ein in den Werkstoff des Profilstabs eingreifendes selbstschneidendes Gewinde ist, in dessen Bereich das Widerlagerstück eine Schneidkanten bildende Querausnehmung aufweist.

Für die Querverbindung ist von Bedeutung, daß die im Fluchtbereich der Längsnuten vorhandenen Verbindungsstellen auch bei der Ausbildung des zylindrischen Widerlagerstücks mit selbstschneidendem Gewinde beibehalten werden. Die Sicherung des anzuschließenden Profilstabs gegen Verdrehung relativ zum querverlaufenden Profilstab wird daher in vergleichsweise grosser Entfernung von der Achse des anzuschließenden Profilstabs vorgenommen. Gegenüber der bekannten bearbeitungsfreien Querverbindung ist der bauliche Aufwand erheblich verringert, weil ein Zwischenkupplungsstück entfällt.

In Ausgestaltung der Erfindung ist die Querverbindung so aufgebaut, daß das zylindrische Widerlagerstück an seinem dem quer verlaufenden Profilstab gegenüberliegenden Ende gewindefrei ausgebildet ist, und daß die schneidkantenbildende Querausnehmung als Bohrung ausgebildet und dem schneidgewindefreien Bereich des Widerlagerstücks benachbart angeordnet ist. Das zylindrische Widerlagerstück hat infolgedessen ein Ende mit einem schneidgewindefreien Außenumfang, welcher der Führung des Widerlagerstücks bei dessen Eindrehen in die Stirnseite des anzuschließenden Profilstabs dient. Da die Querausnehmung als Bohrung ausgebildet ist, ist das schneidgewindefreie Ende des Widerlagerstücks ein im Schneidkantenbereich stabilisierendes Bauteil, verglichen mit einer Ausbildung der Querausnehmung als bis zum Ende offener Schlitz.

Vorteilhafterweise ist der Außenumriß des zylindrischen Widerlagerstücks im Bereich der schneidkantenfreien Querausnehmung konisch ausgebildet. Diese Gestaltung des Widerlagerstücks erleichtert sein Eindrehen in die Längsnut des anzuschließenden Profilstabs.

Um das Eindrehen des zylindrischen Widerlagerstücks zu erleichtern, andererseits aber die Auszugfestigkeit dieses Widerlagerstücks zu erhöhen, ist die Querverbindung so ausgestaltet, daß das Schneidgewinde des zylindrischen Widerlagerstücks dem quer verlaufenden Profilstab zugewendet steilere Flanken aufweist, als verbindungsschraubenkopfseitig.

Bei der aus der DE 34 38 773 A1 bekannten Querverbindung ist das zylindrische Widerlagerstück mit einem Sicherungsvorsprung versehen, der sich über das zugehörige Ende des längs verlaufenden Profilstabs hinaus bis in den Längsnut-Außenschlitz des quer verlaufenden Profilstabs erstreckt. Dabei ist der Sicherungsvorsprung als quaderförmige Nase ausgebildet, die vom Außenbereich der Querverbindung gesehen als die Verbindungsschraube abdeckender Radialvorsprung des zylindrischen Widerlagerstücks ausgebildet ist. Dieser Sicherungsvorsprung ist innerhalb des Längsnut-Außenschlitzes zwischen dem querverlaufenden Profilstab und einer Ausnehmung des anzuschließenden Profilstabs angeordnet, die einen Einbau des Widerlagerstücks quer zum anzuschließenden Profilstab erlaubt. Um die Querverbindung so weiterzubilden, daß ihre Verdrehsicherheit wesentlich erhöht ist, wird sie so gestaltet, daß der Sicherungsvorsprung ein zur Verbindungsschraube koaxial angeordneter und diese umfassender Ringbund ist, und daß der Sicherungsvorsprung und/oder die Durchtrittsbohrung des zylindrischen Widerlagerstücks zumindest auf einem Teil ihrer Länge als mutterseitig betätigbare Innenunrundausnehmung ausgebildet ist.

Der anzuschließende Profilstab kann gegenüber dem querverlaufenden Profilstab nur im Rahmen des Spiels des Sicherungsvorsprungs in der Längsnut des anzuschließenden Profilstabs verdreht werden, da der Sicherungsvorsprung mit dem zylindrischen Widerlagerstück einstückig ausgebildet ist.

Das zylindrische Widerlagerstück wird mit Hilfe eines in die Innenunrundausnehmung eingreifenden Werkzeugs in die Längsnut des anzuschließenden Profilstabs eingedreht. Um dieses Eindrehen mit herkömmlichen Werkzeugen durchführen zu können und die Innenunrundausnehmung nicht über die gesamte Länge der Durchtrittsbohrung für die Verbindungsschraube herstellen zu müssen, ist die Querverbindung so gestaltet, daß die Innenunrundausnehmung des Sicherungsvorsprungs und/oder der Durchtrittsbohrung als Vielkantausnehmung profiliert ist. Als Vielkantausnehmung kommt beispielsweise eine Innensechskant- oder sogenannte Inbus-Ausnehmung infrage, die weit verbreitet ist.

Wenn die Durchtrittsbohrung verbindungsschraubenkopfseitig vor der Schneidkanten bildenden Querausnehmung als Innenunrundausnehmung ausgebildet ist, kann das zylindrische Widerlagerstück nach seinem Eindrehen in eine Längsnut des anzuschließenden Profilstabs zurückgedreht werden, um das sicherungsvorsprungsseitige Ende des selbstschneidenden Gewindes mit der Stirnseite des anzuschließenden Profilstabs genau fluchten zu lassen.

Damit der Kopf der Verbindungschraube so groß wie möglich ist, um deren Betätigung mit möglichst großen Abmessungen eines Verdrehwerkzeugs für die Verbindungsschraube zu erreichen, ist der Außendurchmesser des Kopfes der Verbindungsschraube etwa gleich dem Durchmesser des zylindrischen Widerlagerstücks.

Die Erfindung wird anhand eines in der Zeichnung dargestellten Ausführungsbeispiels erläutert. Es zeigt:
- Fig.1: eine perspektivische Darstellung der Teile der Querverbindung in auseinandergezogener Lage,
- Fig.2: einen Längsschnitt durch die aneinander zu befestigenden Profilstäbe,
- Fig.3: eine Aufsicht auf die Profilstäbe in Richtung A der Fig.2,
- Fig.4a: eine vergrößerte Darstellung eines Querschnitts durch ein zylindrisches Widerlagerstück, und
- Fig.4b: die Ansicht des Widerlagerstücks der Fig.4a in Richtung B.

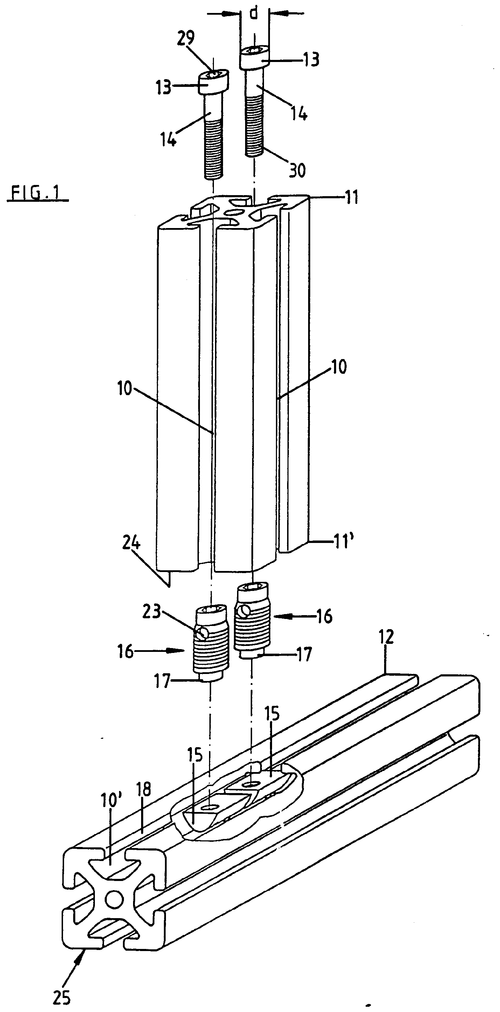

Der Profilstab 11 soll an den quer zu ihm verlaufenden Profilstab 12 mit der Stirnseite 24 verdrehfest angeschlossen werden. Hierzu dienen im wesentlichen die zylindrischen Widerlagerstücke 16, Verbindungsschrauben 14 und Schraubenmuttern 15. Voraussetzung ist, daß die Profilstäbe 11,12 mit hinterschnittenen Längsnuten 10 versehen sind. Die Fig.1 bis 3 zeigen im Querschnitt pilzförmige Längsnuten 10 mit Längsnutaußenschlitzen 18 in jeder Querwand der Profilstäbe 11, 12.

Die Profilstäbe 11,12 haben jeweils dasselbe Querschnittsprofil. Es versteht sich jedoch, daß auch Profilstäbe unterschiedlicher Querschnitte aneinander befestigt werden können, sofern nur Längsnuten 10 vorhanden sind, die den Einbau der oben genannten Verbindungsteile 14 bis 16 gestatten. Sind die Querschnitte der Längsnuten 10 bei unterschiedlichen Profilstabquerschnitten gleich dimensioniert, so braucht nur eine einzige Ausbildung eines Satzes von Verbindungsteilen 14 bis 16 eingesetzt zu werden, was im Vergleich zu der bekannten bearbeitungsfreien Querverbindung ein erheblicher Vorteil ist.

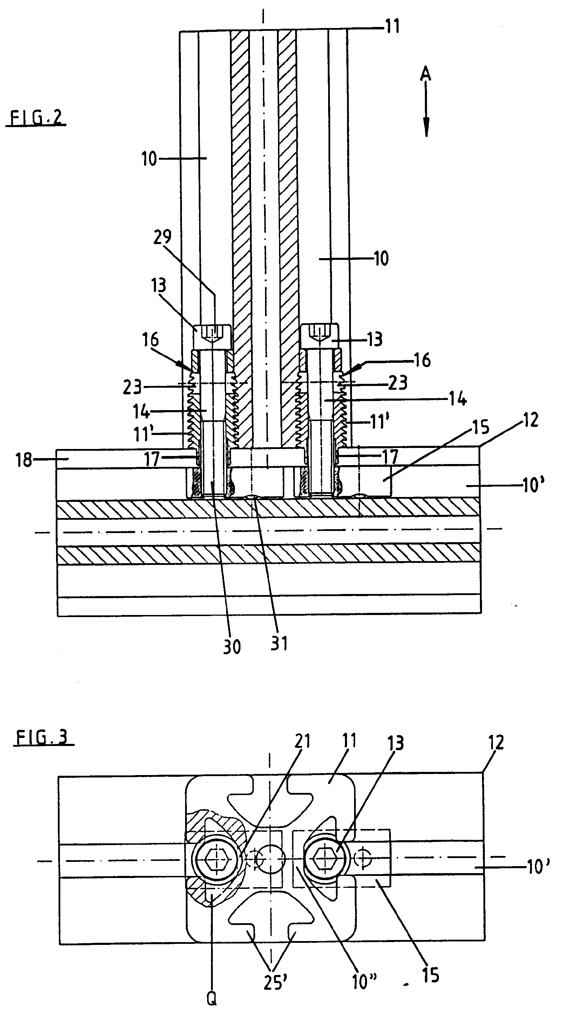

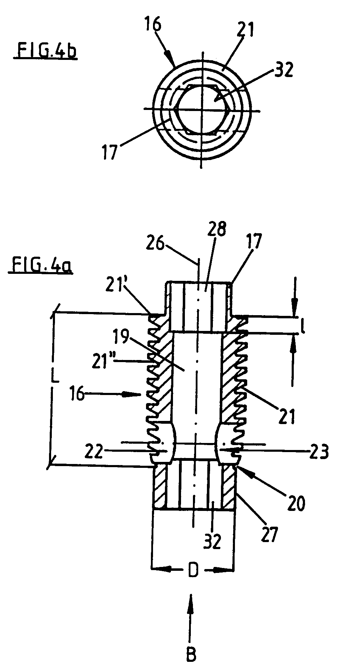

Das zylindrische Widerlagerstück 16 besitzt eine Durchtrittsbohrung 19 für die Verbindungsschraube 14. Sein Außenumfang 20 ist gleichachsig zu der Durchtrittsbohrung 19. Beide haben also dieselbe Achse 26. Der Außendurchmesser D des Widerlagerstücks 16 ist so bemessen, daß dieses in den Querschnitt Q der Längsnut 10 hineingesteckt werden kann. Fig.3 zeigt diesbezüglich, daß das Widerlagerstück 16 den Nutengrund 10'' und die den Längsnut-Außenschlitz 18 bildenden Wandvorsprünge 25' tangiert.

Das zylindrische Widerlagerstück 16 hat einen Sicherungsvorsprung 17, der als Ringbund ausgebildet ist. Er ist mit dem Widerlagerstück 16 einstückig und umfaßt die Verbindungsschraube 14 gleichachsig, wie sich aus Fig.2 ergibt. Der Sicherungsvorsprung 17 ist zum Eingriff in den Längsnut-Außenschlitz 18 des querverlaufenden Profilstabs 12 bestimmt. Dessen Tiefe begrenzt also die maximale Länge des Sicherungsvorsprungs 17, wie sich aus Fig.2 ergibt. Innerhalb des Sicherungsvorsprungs 17 erstreckt sich eine Innensechskantausnehmung als Innenunrundausnehmung 28. Diese Innenunrundausnehmung 28 ragt bis in die Durchtrittsbohrung 19 hinein, damit eine genügende Länge zum Eingriff eines Werkzeugs zur Verfügung steht, mit dem das Widerlagerstück 16 in die Längsnut 10 des Profilstabs 11 eingedreht werden kann.

Der Befestigung des Widerlagerstücks 16 im Profilstab 11 dient das aus Fig.4a auf der Teillänge L vorgesehene selbstschneidende Gewinde 21, welches sägezahnartig ausgebildet ist. Infolgedessen sind sicherungsvorsprungseitig steile Flanken 21' vorhanden, während die gegenüberliegenden Flanken 21'' der Schneidgewindezähne vergleichsweise flach ausgebildet sind. Im Bereich des Schneidgewindes 21 ist eine Querausnehmung 23 vorhanden, die als Bohrung ausgebildet ist. Infolgedessen sind Schneidkanten 22 vorhanden. Im Bereich der Schneidkanten 22 liegt eine konische Gestaltung des Widerlagerstücks vor, d.h. der Durchmesser des selbstschneidenden Gewindes 21 steigt vom Durchmesser D des zylindrischen Widerlagerstücks 16 auf den Außendurchmesser des Gewindes 21 an. Das selbstschneidende Gewinde 21 ist nur auf einem Teil L der Gesamtlänge des Widerlagerstücks 16 vorhanden. Der verbleibende Bereich 27 besitzt exakt den Durchmesser D, mit dem das Widerlagerstück beim Eindrehen in die Stirnseite 24 des Profilstabs 11 eingesteckt und geführt wird.

Die Verbindungschraube 14 besitzt einen Kopf 13, der sich in Einbaulage gemäß Fig.2 auf dem Widerlagerstück 16 abstützt. Der Durchmesser d des Kopfes 13 der Verbindungsschraube 14 ist nur geringfügig kleiner, als der Durchmesser D. Infolgedessen kann eine Innenunrundausnehmung 29 des Kopfes 13 mit vergleichsweise großen radialen Dimensionen versehen werden. Die Darstellung zeigt eine Innensechskantausnehmung, in die ein Kugelkopf eines im Querschnitt sechskantigen Schraubendrehers eingesteckt werden kann, mit dem die Verbindungsschraube 14 verdreht wird. Bei einem derartigen Verdrehen greift das Ende 30 der Verbindungsschraube 14 gemäß Fig.2 in ein Innengewinde einer Bohrung einer Schraubenmutter 15, die in der Längsnut 10' des Profilstabs 12 angeordnet ist.

Gemäß Fig.1 ist die Schraubenmutter 15 mit etwa parabelförmigem Querschnitt ausgebildet, so daß sie mit einer Längskante quer zum Profilstab 12 in dessen Längsnut 10' eingesetzt werden kann, also ohne in letzterer längs über die gesamte Länge des Stabs verschoben werden zu müssen. Die relative axiale Lage im Stab 12 wird durch eine federbeaufschlagte Kugel 31 gesichert. In den Fig.1,2 ist dargestellt worden, daß für jede Verbindungsschraube 14 eine Mutter 15 vorhanden ist. Es kann aber auch für beide Verbindungsschrauben 14 eine einzige, mit zwei Gewindebohrungen versehene Mutter verwendet werden, was den Vorteil hat, daß nur eine einzige Mutternpositionierung vorgenommen werden muß.

Der Zusammenbau der Profilstäbe 11,12 erfolgt derart, daß zunächst die Widerlagerstücke 16 in die Längsnuten 10 eingedreht werden, wobei die selbstschneidenden Gewinde 21 bzw. deren Schneidkanten 22 das erforderliche Befestigungsgewinde im Nutengrund 10'' und in den Wandvorsprüngen 25' herstellen. Fig.3 zeigt den Eingriff des Gewindes 21 in den Nutengrund.

Falls das Widerlagerstück 16 zu tief eingedreht wurde, kann es mit Hilfe der Innenunrundausnehmung 32 soweit wieder herausgedreht werden, daß das selbstschneidende Gewinde 21 sicherungsvorsprungsseitig mit der Stirnseite 24 fluchtet. Hierzu hat das zylindrische Widerlagerstück 16 verbindungsschraubenkopfseitig einen Innenunrundausnehmung 32, die als Sechskant- bzw. Inbus-Ausnehmung ausgebildet ist. Die Tiefe dieser Ausnehmung entspricht etwa der Länge des schneidgewindefreien Bereichs 27. In dieser Stellung des Widerlagerstücks 16 innerhalb der Nut 10 greift der Sicherungsvorsprung 17 so tief wie möglich in den Längsnut-Außenschlitz 18 ein, jedoch ohne auf die Schraubenmutter 15 zu stoßen. Danach wird die Verbindungsschraube 14 durch die Durchtrittsbohrung 19 und den Sicherungsvorsprung 17 hindurchgesteckt und in die Mutter 15 eingeschraubt und festgezogen, so daß der Kopf 13 auf dem Widerlagerstück 16 fest aufsitzt und damit den Profilstab 11 mit der Stirnseite 24 fest gegen den Profilstab 12 zieht.

## Patentansprüche

1. Querverbindung von zwei rechtwinklig aufeinander stehenden, mit hinterschnittenen Längsnuten versehenen Profilstäben (11,12), mit zwei an ihrem einen Ende einen Kopf (13) aufweisenden Verbindungsschrauben (14), die jeweils parallel zur Symmetrieachse eines längs verlaufenden Profilstabes (11) in einer hinterschnittenen Längsnut (10) desselben angeordnet ist, mit ihrem anderen Ende in eine in einer hinterschnittenen Längsnut (10) des quer verlaufenden Profilstabs (12) angeordnete Schraubenmutter (15) eingreifen, und mit ihrem Kopf (13) ein zylindrisches Widerlagerstück (16) hintergreifen, das in die hinterschnittene Längsnut (10) des Profilstabs (11) axial unverschieblich eingebaut ist und das eine Durchtrittsbohrung (19) für eine Verbindungsschraube (14) hat, **dadurch gekennzeichnet,** daß die Symmetrieachse des zylindrischen Widerlagerstücks (16) koaxial zur Symmetrieachse der Durchtrittsbohrung (19) für die Verbindungsschraube (14) angeordnet ist und der Außendurchmesser (D) des Widerlagerstücks (16) dem Querschnitt (Q) der hinterschnittenen Längsnut (10) des Profilstabs (11) so angepaßt ist, daß das auf dem Außenumfang (20) des zylindrischen Widerlagerstücks (16) angebrachte Gewinde ein in den Werkstoff des Profilstabs (11) eingreifendes selbstschneidendes Gewinde (21) ist, in dessen Bereich das Widerlagerstück (16) eine Schneidkanten (22) bildende Querausnehmung (23) aufweist.

2. Querverbindung nach Anspruch 1, **dadurch gekennzeich****net,** daß das zylindrische Widerlagerstück (16) an seinem dem quer verlaufenden Profilstab (12) gegenüberliegenden Ende gewindefrei ausgebildet ist, und daß die schneidkantenbildende Querausnehmung (23) als Bohrung ausgebildet und dem schneidgewindefreien Bereich des Widerlagerstücks (16) benachbart angeordnet ist.

3. Querverbindung nach Anspruch 1 oder 2, **dadurch gekennzeichnet**, daß der Außenumriß des zylindrischen Widerlagerstücks (16) im Bereich der schneidkantenbildenden Querausnehmung (23) konisch ausgebildet ist.

4. Querverbindung nach einem oder mehreren der Ansprüche 1 bis 3, **dadurch gekennzeichnet**, daß das Schneidgewinde (21) des zylindrischen Widerlagerstücks (16) dem quer verlaufenden Profilstab (12) zugewendet steilere Flanken (21') aufweist, als verbindungsschraubenkopfseitig.

5. Querverbindung nach einem oder mehreren der Ansprüche 1 bis 4, **dadurch gekennzeichnet**, daß das zylindrische Widerlagerstück (16) mit einem Sicherungsvorsprung (17) versehen ist, der sich über das zugehörige Ende des längs verlaufenden Profilstabs (11) hinaus bis in den Längsnut-Außenschlitz (18) des quer verlaufenden Profilstabs (12) erstreckt, wobei der Sicherungsvorsprung (17) ein zur Verbindungsschraube (14) koaxial angeordneter und diese umfassender Ringbund ist, und daß der Sicherungsvorsprung (17) und/oder die Durchtrittsbohrung (19) des zylindrischen Widerlagerstücks (16) zumindest auf einem Teil ihrer Länge (1) als mutterseitig betätigbare Innenunrundausnehmung (28) ausgebildet ist.

6. Querverbindung nach einem oder mehreren der Ansprüche 1 bis 5, **dadurch gekennzeichnet**, daß die Innenunrundausnehmung (28) des Sicherungsvorsprungs (17) und/oder der Durchtrittsbohrung (19) als Vielkantausnehmung profiliert ist.

7. Querverbindung nach einem oder mehreren der Ansprüche 1 bis 6, **dadurch gekennzeichnet**, daß die Durchtrittsbohrung (19) verbindungsschraubenkopfseitig vor der Schneidkanten (22) bildenden Querausnehmung (23) als Innenunrundausnehmung (32) ausgebildet ist.

8. Querverbindung nach einem oder mehreren der Ansprüche 1 bis 7, **dadurch gekennzeichnet**, daß der Außendurchmesser (d) des Kopfes (13) der Verbindungsschraube (14) etwa gleich dem Durchmesser (D) des zylindrischen Widerlagerstücks (16) ist.

## Claims

1. Cross-connection of two mutually perpendicular profiled struts (11,12) provided with undercut longitudinal grooves, comprising two connecting screws (14) each having a head (13) at one end, each of which screws is arranged parallel to the axis of symmetry of one longitudinally extending profiled strut (11) in an undercut longitudinal groove (10) thereof, with the other end of each screw engaging in a nut (15) arranged in an undercut longitudinal groove (10) of the transversely extending profiled strut (12), and with its screw head (13) engaging behind a cylindrical thrust piece (16) which is mounted in the undercut longitudinal groove (10) of said one profiled strut (11) so as to be axially non-displaceable therein and which has a throughbore (19) for a connecting screw (14), characterised in that the axis of symmetry of the cylindrical thrust piece (16) is arranged to be coaxial with respect to the axis of symmetry of the throughbore (19) for the connecting screw (14), and the outer diameter (D) of the thrust piece (16) is matched to the cross-section (Q) of the undercut longitudinal groove (10) of said one profiled strut (11) so that the thread provided on the external periphery (20) of the cylindrical thrust piece (16) is a self-cutting thread (21) engaging in the material of said one profiled strut (11), and wherein the thrust piece (16) has a transverse recess (23) forming a cutting edge (22) in the region of the thread (21).

2. Cross-connection according to claim 1, characterised in that the cylindrical thrust piece (16) has no thread at its end which is remote from the transversely extending profiled strut (12), and in that the transverse recess (23) which forms a cutting edge is formed as a bore and is adjacent to the region of the thrust piece (16) which is without the cutting thread.

3. Cross-connection according to claim 1 or 2, characterised in that the external contour of the cylindrical thrust piece (16) is tapered in the region of the transverse recess (23) which forms a cutting edge.

4. Cross-connection according to one or more of claims 1 to 3, characterised in that the cutting thread (21) of the cylindrical thrust piece (16) has flanks (21') which are steeper on the side facing the transversely extending profiled strut (12) than on the connecting screw head side.

5. Cross-connection according to one or more of claims 1 to 4, characterised in that the cylindrical thrust piece (16) is provided with a locating spigot (17) which extends beyond the associated end of the longitudinally extending profiled strut (11) into the longitudinal groove outer slot (18) of the transversely extending profiled strut (12), wherein the locating spigot (17) is an annular collar arranged coaxially with respect to the connecting screw (14) and encircling said screw, and in that the locating spigot (17) and/or the throughbore (19) of the cylindrical thrust piece (16) has at least over a part of its length (1) an internal non-circular recess (28) which can be accessed on the nut side.

6. Cross-connection according to one or more of claims 1 to 5, characterised in that the internal non-circular recess (28) of the locating spigot (17) and/or of the throughbore (19) has a polygonal profile.

7. Cross-connection according to one or more of claims 1 to 6, characterised in that the throughbore (19) is formed as an internal non-circular recess (32) on the connecting screw head side in front of the transverse recess (23) which forms the cutting edges (22).

8. Cross-connection according to one or more of claims 1 to 7, characterised in that the external diameter (d) of the head (13) of the connecting screw (14) is approximately equal to the diameter (D) of the cylindrical thrust piece (16).

## Revendications

1. Liaison transversale de deux barres profilées (11, 12), faisant entre elles un angle droit, comportant des rainures longitudinales dotées de contre-dépouilles, avec deux vis de liaison (14), présentant à une extrémité une tête (13) et disposées chaque fois parallèlement à l'axe de symétrie d'une barre profilée (11) s'étendant longitudinalement, dans une rainure longitudinale (10) à contre-dépouille de celle-ci, en s'engageant avec son autre extrémité dans un écrou à filetage mâle (15) disposé dans une rainure longitudinale (10), à contre-dépouille, de la barre profilée (12) s'étendant transversalement, et saisissant par l'arrière, à l'aide de sa tête (13), une pièce de contre-palier (16) cylindrique, introduite de façon immobile axialement dans la rainure longitudinale (10) à contre-dépouille de la barre profilée (11) et comportant un trou de passage (19) pour une vis de liaison (14), caractérisée en ce que l'axe de symétrie de la pièce de contre-palier (16) cylindrique est disposé coaxialement par rapport à l'axe de symétrie du trou de passage (19) destiné à la vis de liaison (14), et le diamètre extérieur (D) de la pièce de contre-palier (16) étant adapté à la section transversale (9) de la rainure longitudinale (10) de la barre profilée (11), de manière que le filetage réalisé sur la périphérie extérieure (20) de la pièce de contre-palier (16) cylindrique soit un filetage (21) autotaraudeur, s'engageant dans le matériau de la barre profilée (11) et dans la zone duquel la pièce de contre-palier (16) présente un évidement transversal (23) formant des arêtes de coupe (22).

2. Liaison transversale selon la revendication 1, caractérisée en ce que la pièce de contre-palier (16) cylindrique est réalisée sans filetage à son extrémité placée en regard de la barre profilée (12) s'étendant transversalement, et en ce que l'évidement transversal (23) formant des arêtes de coupe est réalisé sous forme de perçage et disposé au voisinage de la zone exempte de filetage de coupe de la pièce de contre-palier (16).

3. Liaison transversale selon la revendication 1 ou 2, caractérisée en ce que le contour extérieur de la pièce de contre-palier (16) cylindrique est conique dans la zone de l'évidement transversal (23) formant des arêtes de coupe.

4. Liaison transversale selon l'une ou plusieurs des revendications 1 à 3, caractérisé en ce que le filetage de coupe (21) de la pièce de contre-palier (16) cylindrique présente des flancs (21'), tournés vers la barre profilée (12) s'étendant transversalement, plus inclinés que du côté de la vis de liaison.

5. Liaison transversale selon l'une ou plusieurs des revendications 1 à 4, caractérisé en ce que la pièce de contre-palier (16) cylindrique est pourvue d'une saillie de sécurité (17), s'étendant sur l'extrémité afférente de la barre profilée (11) s'étendant longitudinalement, jusque dans la fente extérieure (18) de la rainure longitudinale de la barre profilée (12) s'étendant transversalement, la saillie de sécurité (17) étant une collerette annulaire, disposée coaxialement par rapport à la vis de liaison (14) et l'enchâssant, et en ce que la saillie de sécurité (17) et/ou le trou de passage (19) de la pièce de contre-palier (16) cylindrique sont réalisés au moins sur une partie de leur longueur (1) avec un évidement intérieur (28) non circulaire, pouvant être actionné côté écrou.

6. Liaison transversale selon l'une ou plusieurs des revendications 1 à 5, caractérisé en ce que l'évidement intérieur (28) non circulaire de la saillie de sécurité (17) et/ou le trou de passage (19) sont réalisés sous forme d'un évidement polygonal.

7. Liaison transversale selon l'une ou plusieurs des revendications 1 à 6, caractérisé en ce que le trou de passage (19) est réalisé du côté des vis de liaison, avant l'évidement transversal (23) formant les arêtes de coupe (22), sous forme d'évidement intérieur (32) non circulaire.

8. Liaison transversale selon l'une ou plusieurs des revendications 1 à 7, caractérisé en ce que le diamètre extérieur (d) de la tête (13) de la vis de liaison (14) est à peu près égal au diamètre (D) de la pièce de contre-palier (16) cylindrique.
